# EUROPEAN PATENT APPLICATION

(11) **EP 1 058 025 A1**
(43) Date of publication of application: **06.12.2000**
(21) Application number: 00109763.3
(22) Date of filing: 09.05.2000
(51) Int. Cl.: F16D 69/02, C09K 3/14

(54) **Additive for brake pad compositions, method for preparing this additive and brake pad composition made with this additive**

(30) Priority: 04.06.1999 IT MI991259
(71) Applicant: QUARTZ S.A.S. DI ALBERTO QUARTAPELLE, 20144 MILANO (IT)
(72) Inventor: Quartapelle, Alberto, 20144 Milano (IT)
(74) Representative: Petruzziello, Aldo

(57) **Abstract**

A new additive for the composition of brake pads, made up of granules of at least one hard material (K₃AlF6, KAlF₄, FeS₂ or one of these), coated with a film of at least one softer material (such as graphite or molybdenum disulphide).

The additive is suitable for replacing the traditional use in brake pad compositions of antimony compounds, for which the amount dispersed in the environment has now become excessive.

## Description

The present invention concerns a new additive for brake pad compositions. The same invention also extends to the method for preparing this additive and the brake pad composition produced therewith.

The field of the invention is that of compositions used to prepare brake pads, components which serve to create friction against a moving surface, in order to provide a braking effect.

During the manufacture of brake pads, use is made of many different products which are mixed together and packed to form plates or pads of hardened material. This must be suitable principally to create sufficient friction to provide the desired braking effect, and must also have a certain cooling capacity, in order to avoid overheating. In addition, the material used in the preparation of brake pads must maintain the state of cohesion of the pad, also avoiding screeching during the braking action. All these objectives must be achieved simultaneously and each manufacturer has developed its own mixtures, usually of minerals, metals and chemical products in general.

One of the most widely used products present in these brake pad mixtures is antimony trisulphide, Sb₂ S₃. This compound is normally present in percentages between 1% and 5% and is used for its ability to subtract heat, together with its ability to behave in a manner favourable to braking at any working temperature.

Antimony is not a toxic substance, but because of the high concentrations it has reached in the environment, its use is expected to be banned at European level within the next few years. For this reason all brake pad manufacturers are trying to replace antimony with another product having similar properties. However, the search for this different material is complicated by the fact that the reactions that take place in a brake pad at high braking temperatures are not entirely clear, nor is it fully known how the different components react with each other.

The main object of the present invention therefore becomes that of providing a new additive for brake pad compositions which, unlike those of the prior art with anti-overheating functions, contains a compound other than antimony sulphide that is not harmful and is able to avoid overheating during braking. This and other objects are achieved with the additive, the method and the composition according to claims 1, 11 and 14, respectively. Preferred embodiments of the invention are apparent from the remaining claims.

Compared with the present mixtures of minerals and chemical products in general used for manufacturing brake pads, that of the invention holds the advantage of excluding the presence of antimony, yet maintaining all the properties offered by the latter. Thus it is possible to stop introduction into the environment of further amounts of antimony, which have now become excessive.

The additive for brake pad compositions according to the present invention is of a suitable type to avoid overheating during braking. It consists of granules of at least one hard material with a thin layer or film of at least one softer material. The latter thus forms a film that coats the granules of more resistant material and favours cooling of the pad during braking.

The granules of the above mentioned harder material are made up of potassium aluminium fluoride K₃AlF₆, KAlF₄, or both, to which some pyrite can also be added. The hardness of this material is preferably greater than 4 MOHS.

The softer material, on the other hand, consists of graphite, preferably combined with a molybdenum compound, for example MoS₂ (hardness less than 2 MOHS)

Preparation of the additive of the invention is carried out by grinding the harder material in the form of granules, which are preferably of a size between 20-45 microns. The granules thus obtained are mixed thoroughly with the above mentioned softer material in a roller mixer for a time of at least two hours.

The mixing operation essentially achieves spreading of the above mentioned soft material on the surface of the granules of hard material, coating the latter with a thin film of the former material.

According to one example of the composition of the additive of the invention, this comprises (the percentages are in weight)
- K₃AlF₆ (or KAlF₄): 50%
- Pyrite: 10%
- Graphite: 15%
- MoS₂: 25%

According to a further example, the additive of the invention has the following composition:
- K₃AlF₆ (or KAlF₄): 25%
- Pyrite: 25%
- Graphite: 25%
- MoS₂: 25%

The additive thus prepared is added to a brake pad composition (a mixture of minerals and chemical compounds in general) in place of the traditional antimony-based cooling compounds. The composition containing the additive is subjected to the conventional processing to obtain a brake pad such as to meet all the requirements made of this type of application and recalled above.

## Claims

1. An additive for brake pad compositions, suitable in particular to avoid overheating phenomena during braking, characterized in that it is made up of granules of at least one hard material, coated with a film of at least one softer material.

2. An additive according to claim 1, characterized in that said at least one hard material consists of potassium aluminium fluoride.

3. An additive according to claims 1 or 2, characterized in that said at least one hard material is K₃AlF₆, KAlF₄ or both.

4. An additive according to claims 2 or 3, characterized in that said at least one hard material also includes pyrite.

5. An additive according to the previous claims, characterized in that said at least one soft material consists of graphite.

6. An additive according to claim 5, characterized in that said at least one soft material also comprises a molybdenum derivative.

7. An additive according to claim 6, characterized in that said molybdenum derivative is MoS₂.

8. An additive according to one or more of the preceding claims, characterized in that the hardness of said at least one hard material is greater than 4 MOHS and the hardness of said at least one soft material is less than 2 MOHS.

9. An additive according to one or more of the preceding claims, characterized in that it has the following composition in weight percentage:
K₃AlF₆ (or KAlF₄) 50%
Pyrite 10%
Graphite 15%
MoS₂ 25%

10. An additive according to one or more of claims 1 to 8, characterized in that it has the following composition in weight percentage:
K₃AlF₆ (or KAlF₄) 25%
Pyrite 25%
Graphite 25%
MoS₂ 25%

11. A method for realization of the additive according to one or more of claims 1 to 10, characterized in that it comprises:
- grinding of said at least one hard material, in order to obtain a product in granular form; and
- thorough mixing of the granular product thus obtained with said at least one soft material, so that the latter is deposited in the form of a film that coats the granules of said at least one hard material.

12. A method according to claim 11, characterized in that the granules of said at least one hard material have a size of 20-45 microns.

13. A method according to one or more of claims 10 to 12, characterized in that said mixing is carried out in a roller mixer for a time of at least two hours.

14. A brake pad composition, characterized in that it comprises an additive according to one or more of the preceding claims 1 to 10 acting as an additive able to avoid overheating phenomena during braking.

15. A brake pad, characterized in that it is made up of a composition according to claim 14.
